# NEUE EUROPÄISCHE PATENTSCHRIFT

(11) **EP 0 301 189 B2**
(45) Veröffentlichungstag und Bekanntmachung des Hinweises auf die Entscheidung über den Einspruch: **26.08.1998**
(45) Hinweis auf die Patenterteilung: 12.05.1993
(21) Anmeldenummer: 88108096.4
(22) Anmeldetag: 20.05.1988
(51) Int. Cl.: B29C 47/32

(54) **Verfahren und Vorrichtung zum Herstellen eines Rippen-Rohres aus Kunststoff**
Method and apparatus for manufacturing a ribbed plastic pipe
Procédé et dispositif de fabrication d'un tube nervuré en matière plastique

(30) Priorität: 30.07.1987 DE 3725286
(43) Veröffentlichungstag der Anmeldung: 01.02.1989
(73) Patentinhaber: Hegler, Wilhelm, D-97688 Bad Kissingen (DE)
(72) Erfinder: Hegler, Wilhelm, D-8730 Bad Kissingen (DE); Hegler, Ralph-Peter, Dr.-Ing., D-8730 Bad Kissingen (DE)
(74) Vertreter: Rau, Manfred, Dr. Dipl.-Ing.

(56) Entgegenhaltungen:
- EP-A- 0 005 104
- EP-A- 0 065 729
- EP-A- 0 237 900
- WO-A-87/04113
- DE-A- 2 362 444
- DE-U-MR 025 639
- US-A- 3 891 007
- Prospekt: "The Ultimate Pipe" von der Firma Oy Uponor AB

## Beschreibung

Die Erfindung bezieht sich auf ein Verfahren nach dem Oberbegriff des Anspruches 1 und auf eine Vorrichtung nach dem Oberbegriff des Anspruches 3.

Aus der EP 0 005 104 A1 ist ein Verfahren der gattungsgemäßen Art bekannt. Dabei werden in einem sich in einer Produktionsrichtung bewegenden Formraum in Produktionsrichtung hintereinander vorgesehene Rippen durch Eintritt von Kunststoff-Schmelze in den Formraum nacheinander ausgeformt und ein mit den Rippen einstückiges Rohr gebildet. Die Rippen und die zwischen ihnen angeordneten Einschnürungen weisen eine Längskontur auf, die durch kontinuierlich aneinandergereihte halbkreisförmige Begrenzungslinien charakterisiert ist. Das Füllen der Rippen-Formausnehmungen mit Kunststoff-Schmelze erfolgt undefiniert. Insbesondere ist nicht gewährleistet, daß die Rippen-Formausnehmungen vollständig und blasenfrei mit Kunststoff-Schmelze ausgefüllt werden, da sich bei Eintreten der Kunststoffschmelze in die Rippen-Formausnehmungen Blasen ausbilden können, die aufgrund des Formdruckes der Schmelze nicht mehr entweichen können.

Aus der DE-A-23 62 444 ist eine Vorrichtung der gattungsgemäßen Art bekannt, auf der das gattungsgemäße Verfahren ausgeübt wird. Hierbei erstreckt sich der Spritzdorn ein relativ langes Stück in Produktionsrichtung bis vor den Düsenspalt. Im Bereich dieses durch den sich kegelstumpfförmig erweiternden Spritzdorn und die Formausnehmung gebildeten Expansionsraums befinden sich zahlreiche Rippen-Formausnehmungen, deren Füllen undefiniert erfolgt. Des weiteren ist ein sicherer Tränsport des Schlauches mit Rippen durch den Formraum nicht gewährleistet.

Aus der DE-C-24 50 171 ist eine der gattungsgemäßen Vorrichtung ähnliche Vorrichtung bekannt, bei der der Formraum sich an einen Schmelzekanal anschließt. Am Ende des Formraums ist ein sich kegelstumpfförmig erweiternder Spritzdorn angebracht, mittels dessen eine Kalibrierung des Rohres erfolgt. Auch hier erfolgt das Füllen der Rippen-Formausnehmungen undefiniert. Darüber hinaus ist die Gefahr groß, daß Schmelze in den Bereich zwischen Düse und Formausnehmung eindringt und verbrennt.

Der Erfindung liegt die Aufgabe zugrunde, ein Verfahren der gattungsgemäßen Art so weiterzubilden, daß ein genaues Füllen der Rippen-Formausnehmungen und damit eine genaue Kontur des zu erzeugenden Rohres erreicht wird.

Diese Aufgabe wird erfindungsgemäß durch die Merkmale des Anspruches 1 gelöst. Durch die erfindungsgemäß auszubildenden Erhebungen wird der noch fast flüssige Kunststoff bereits mitgenommen. Im Bereich dieser Erhebungen kühlt er bereits geringfügig ab, so daß ein verstärkter Mitnahmeeffekt gegeben ist. Damit wird sichergestellt, daß immer erst Material in eine voreilende noch nicht vollständig gefüllte Rippen-Formausnehmung hineingedrückt wird und daß erst dann, wenn diese vollständig gefüllt ist, die Schmelze zurückdrückt und die nächste nachfolgende Rippen-Formausnehmung füllt. Durch die Erhebungen wird weiterhin sichergestellt, daß ein Rückschlag des Materials nicht erfolgen kann. Durch das weiterhin vorgesehene Entlüften des Formraumes wird dessen vollständiges Füllen zusätzlich unterstützt.

Anspruch 2 gibt eine vorteilhatte Ausgestaltung des vorstehend beschriebenen Verfahrens an.

Die erfindungsgemäße Lösung bei der gattungsgemäßen Vorrichtung nach Anspruch 3 gewährleistet, daß die Erhebungen am Schlauch ausgeformt werden und daß der Schlauch mitgenommen wird. Die Ausgestaltung nach Anspruch 4 gewährleistet daß im Expansionsraum kein Überdruck entsteht, der die Schmelze in den Spalt zwischen der Düse und der Formausnehmung zurückdrücken könnte, was ohnehin auch dort durch die Förderrillen in den Halbkokillen verhindert wird. Die Ausgestaltung nach Anspruch 5 fördert die vorstehend angegebenen Effekte.

Die Maßnahmen nach Anspruch 6 stellen sicher, daß das Kalibrieren der Innenwand des Schlauches und damit des späteren Rohres erst zu einem relativ späten Zeitpunkt erfolgt, wenn auf jeden Fall die Rippen bereits zuverlässig gebildet sind.

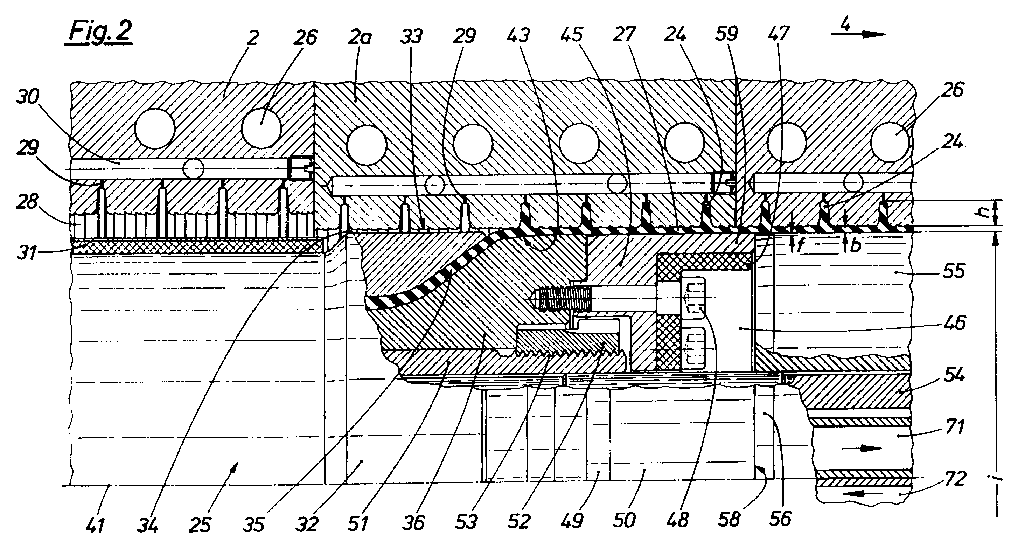

Weitere Vorteile und Merkmale der Erfindung ergeben sich aus der nachfolgenden Beschreibung eines Ausführungsbeispiels anhand der Zeichnung. Es zeigt
Fig. 1
   eine Draufsicht auf eine Vorrichtung zur Herstellung von Rippen-Rohren aus Kunststoff,
Fig. 2
   einen Teilausschnitt der Vorrichtung im Horizontalschnitt,
Fig. 3 bis Fig. 6
   einen Teilausschnitt aus Fig. 2 in unterschiedlichen Produktionsstadien, und
Fig. 7 bis Fig. 9
   Teilausschnitte durch Rippen-Rohre mit unterschiedlichen Ring-Erhebungen.

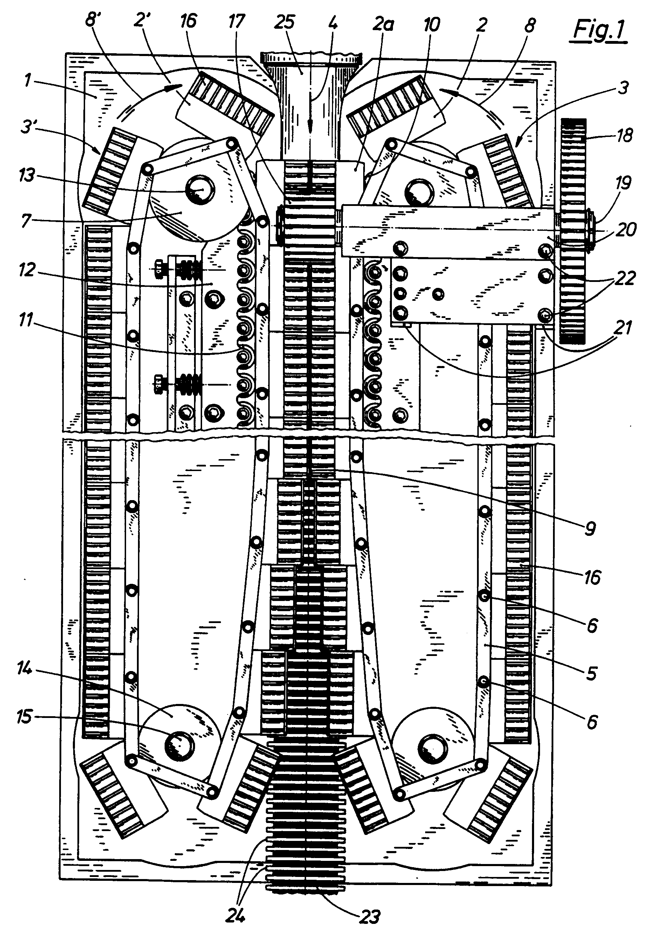

Wie Fig. 1 erkennen läßt, weist die Vorrichtung zur Herstellung von Kunststoff-Rippen-Rohren einen Maschinentisch 1 auf, auf dem Halbkokillen 2,2' angeordnet sind, die jeweils zu zwei sogenannten Ketten 3 bzw. 3' miteinander verbunden sind. Hierzu ist an jeder Halbkokille 2 bzw. 2' an ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3,3' sind an ihrem in Produktionsrichtung 4 gesehen rückwärtigen Ende über als sogenannte Einlaufrollen 7 dienende Umlenkräder geführt. Die einzelnen Halbkokillen 2,2' werden beim Umlauf der Ketten 3,3' entsprechend den Umlaufrichtungspfeilen 8 bzw. 8' in eine Formstrecke 9 eingeschwenkt, in der jeweils zwei Halbkokillen 2,2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2,2' zu einer parallelen und aneinanderliegenden Stellung zu erreichen, sind sogenannte Schließrollen 10 vorgesehen, die die in Produktionsrichtung 4 hinteren Enden der Halbkokillen 2,2' beschleunigt zusammenführen. In der Formstrecke 9 selber werden die aneinanderliegenden Halbkokillen 2,2' mittels Führungsrollen 11 die in Führungsleisten 12 drehbar gelagert sind, gegeneinander gedrückt. Die Einlaufrollen 7 sind um Achszapfen 13 drehbar am Maschinentisch 1 angebracht.

Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden. An der Oberseite der Halbkokillen 2,2' ist eine Verzahnung 16 ausgebildet, wobei die beiden Verzahnungen 16 der einander paarweise zugeordneten Halbkokillen 2,2' miteinander fluchten, so daß von oben ein gemeinsames Antriebsritzel 17 in diese Verzahnung 16 eingreifen kann, das die Halbkokillen 2,2' als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzerem mittels Schrauben 22 fest verbunden ist.

Mit der dargestellten Vorrichtung werden Kunststoff-Rohre 23 mit sich radial und über den Außenumfang der Rohre 23 als geschlossene Ringscheiben erstreckenden Rippen 24 hergestellt. Derartige Rippen-Rohre haben eine besonders hohe Scheiteldruckfestigkeit. Es ist ein Extruder vorgesehen, von dem nur die Spritzdüse 25 angedeutet ist, aus dem in weiter unten noch im einzelnen zu beschreibender Weise Kunststoff-Schmelze 23a extrudiert wird, die in flüssigem Zustand in die in der Formstrecke 9 gebildete Form einfließt, in der das Rohr 23 mit den Rippen 24 ausgebildet wird. Die bisher beschriebene Vorrichtung ist - mit Ausnahme der speziellen Ausgestaltung der Rohre 23 mit Rippen 24 - bekannt und zwar beispielsweise aus der DE-PS 20 61 027 bzw. der EP-PS 0 065 729.

In der Formstrecke 9 werden die paarweise aneinander angeordneten Halbkokillen 2,2' gekühlt. Hierzu sind in ihnen Kühlwasserkanäle 26 ausgebildet. Die in den Halbkokillen 2,2a zur Bildung eines Formraums 27 ausgeformten Formausnehmungen 28 haben eine zu der Außenform des Rohres 23 mit Rippen 24 komplementäre Form. Sie sind an ihren radial am weitesten außenliegenden Stellen, mit Entlüftungsbohrungen oder - schlitzen 29 versehen, die in Entlüftungskanäle 30 einmünden. Diese sind an nicht dargestellte Teil-Vakuum-Quellen angeschlossen, so daß ein Entlüften und vollständiges Füllen des Formraums 27 mit dem das Rohr 23 mit Rippen 24 formenden Kunststoff gewährleistet ist.

Die Spritzdüse 25 ist in dem Bereich, in dem die Halbkokillen 2,2' noch nicht vollständig zu einer Kokille geschlossen sind, mit einer Heizung 31 umgeben, um die aus dem Extruder extrudierte und durch die Spritzdüse 25 geförderte komprimierte Kunststoff-Schmelze 23a auf der erforderlichen Temperatur zu halten. Wenn Polyvinylchlorid (PVC) als Kunststoff eingesetzt wird, beträgt diese Temperatur etwa 195 bis 200°C. Kurz hinter dem Beginn der Formstrecke, also kurz hinter dem Bereich, an dem die einander komplementären Halbkokillen 2,2' fest aneinanderliegen, erweitert sich der Außenumfang der Spritzdüse 25 zu einem zylindrischen Endabschnitt 32. Die entsprechende gerade in ihrer Schließstellung befindlichen Halbkokille ist in der Zeichnung mit 2a bezeichnet. Zwischen der radial innenliegenden Seite 33 der Halbkokille 2a und dem zylindrischen Endabschnitt 32 ist nur ein Sicherheitsspalt 34 vorgesehen, der sicherstellt, daß die Halbkokille 2a nicht mit dem zylindrischen Endabschnitt 32 der Spritzdüse 25 in Berührung kommt. Die Breite des Sicherheitsspaltes beträgt daher zwischen 0,3 und 0,8 mm.

In dem Endabschnitt 32 der Spritzdüse 25 ist ein sich stetig nach außen erweiternder Schmelze-Kanal 35 ausgebildet, der nach innen hin durch einen Spritzdorn 36 begrenzt wird. Am Austritt des Schmelze-Kanals 35 aus dem zylindrischen Endabschnitt 32 der Spritzdüse 25, also am Düsenspalt 37 ist ein Expansionsraum 38 vorgesehen, dessen radiale Erstreckung a möglichst nicht mehr als das 1,5fache der minimalen Wandstärke b des Rohres 23 ist.

Der Spritzdorn 36 weist einen sich an den Düsenspalt 37 anschließenden ersten Kegel-Abschnitt 39 auf, an den sich in Produktionsrichtung 4 ein zweiter Kegel-Abschnitt 40 anschließt. Der erste Kegel-Abschnitt 39 bildet mit der Mittel-Längs-Achse 41 der Spritzdüse 25 bzw. des zu erzeugenden Rohres 23 bzw. des Formraums 27 einen Winkel c von etwa 5°. Der zweite Kegel-Abschnitt 40 bildet mit der Achse 41 einen Winkel d von etwa 3°. Der Übergang 42 des Spritzdorns 36 im Bereich des Düsenspaltes 37 in den ersten Kegel-Abschnitt 39 ist abgerundet. Der erste Kegel-Abschnitt 39 und der zweite Kegel-Abschnitt 40 bilden zusammen eine Formschräge 43, an die sich noch ein zylindrischer Abschnitt 44 des Spritzdorns 36 anschließt.

Am Spritzdorn 36, und zwar an dessen zylindrischem Abschnitt 44, ist ein Bügelkopf 45 angebracht. Dieser ist topfförmig ausgebildet, d.h. er weist eine in Produktionsrichtung 4 offene zylindrische Ausnehmung 46 auf, die mit einer glockenförmigen Wärmeisolierung 47 ausgekleidet ist. Zur Befestigung des Bügelkopfes am Spritzdorn 36 dienen Schraubenbolzen 48. Der Bügelkopf 45 weist in dem sich an den zylindrischen Abschnitt 44 des Spritzdorns 36 anschließenden Bereich einen sich in Produktionsrichtung 4 erweiternden Kegel-Abschnitt 49 auf, an den sich ein zylindrischer Abschnitt 50 anschließt. Der Kegel-Abschnitt 49 schließt einen Winkel e zur Achse 41 von 3 bis 4° ein.

Der Spritzdorn 36 und mit ihm der an ihm befestigte Bügelkopf 45 sind auf einem Spritzdornhalter 51 angebracht und dort mittels einer Ringmutter 52 auf einem Gewinde 53 des Spritzdornhalters 51 gehalten.

Durch den Spritzdornhalter 51 ist konzentrisch zur Achse 41 ein Kühl-Hohldorn 54 geführt, auf dem ein Kühldorn 55 angebracht ist. Dieser Kühldorn 55 ist durch Kühlwasser kühlbar, das durch den Hohldorn 54 zu und abgeführt wird. Ein entsprechender Kühlwasserzulauf 71 und ein Kühlwasserablauf 72 sind in Fig. 2 angedeutet. Am Übergang vom zylindrischen Abschnitt 50 des Bügelkopfes 45 zum Kühldorn 55 weist dieser einen sich in Produktionsrichtung 4 erweiternden Kegelansatz 56 auf, der mit der Achse 41 einen Winkel f von 3 bis 4° einschließt. Ansonsten ist der Kühldorn 55 zylindrisch ausgebildet. Der Bügelkopf 55 liegt flächig an der ringförmigen Stirnseite 57 des Spritzdorns 36 an. Der Kühldorn 55 liegt mit' einer Anpaßfläche 58 an der zugeordneten Stirnseite des Bügelkopfes an.

Hierdurch bedingt kann ein Wärmefluß vom Spritzdorn 36 über den Bügelkopf 45 zum gekühlten Kühldorn 55 erfolgen, der durch die glockenförmige Wärmeisolierung 47 im Bügelkopf 45 gebremst wird, da der Wärmedurchtrittsquerschnitt in dem ringzylindrischen Teil 59 des Bügelkopfes 45 verhältnismäßig klein ist.

Die Formausnehmung 28 der Halbkokillen 2,2a weist im wesentlichen zylindrisch ausgebildete, die radial innenliegende Seite 33 der entsprechenden Halbkokille 2,2a bildende Rohraußenwand-Formabschnitte 60 auf, zwischen denen jeweils in gleichbleibenden Abständen die zur Formung der Rippen 24 dienenden Rippen-Formausnehmungen 61 angeordnet sind. Die Rohraußenwand-Formabschnitte 60 weisen Förderrillen 62 auf, die sich um den vollen Zylinderumfang des Formabschnittes 60 erstrecken und die zu entsprechenden Ring-Erhebungen 63 auf der Rohr-Außenwand führen.

Die Förderrillen 62 werden auf ihrer jeweilsbezogen auf die Produktionsrichtung 4 - hinteren Seite durch eine im wesentlichen radial zur Achse 41 verlaufende Förderfläche 64 begrenzt. Ihre andere Begrenzungsfläche 65 verläuft flach zur Achse 41 geneigt in Richtung zur nächsten, in Produktionsrichtung 4 vorlaufenden Förderfläche 64 der nächsten voreilenden Förderrille 62.

Die Herstellung eines Rippen-Rohres erfolgt im wesentlichen in drei Phasen.

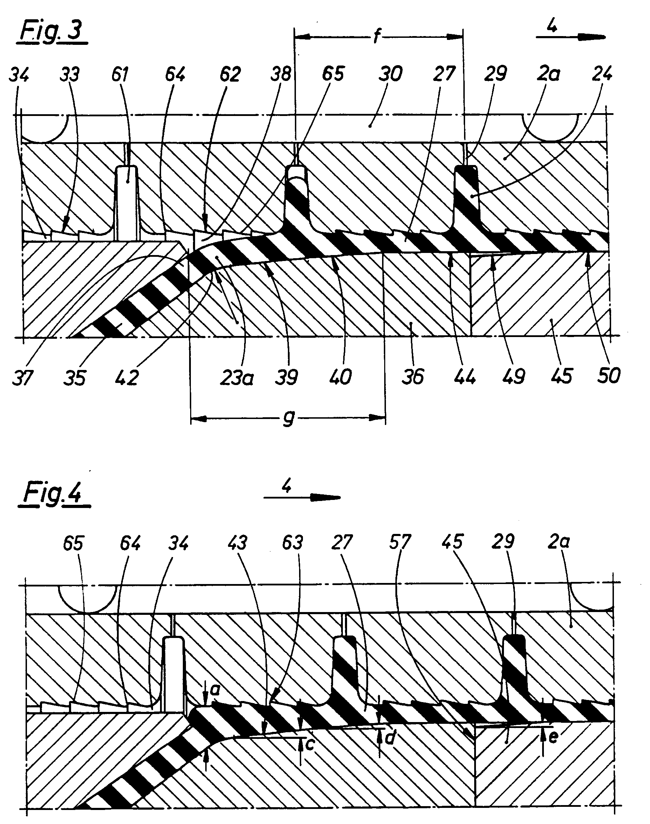

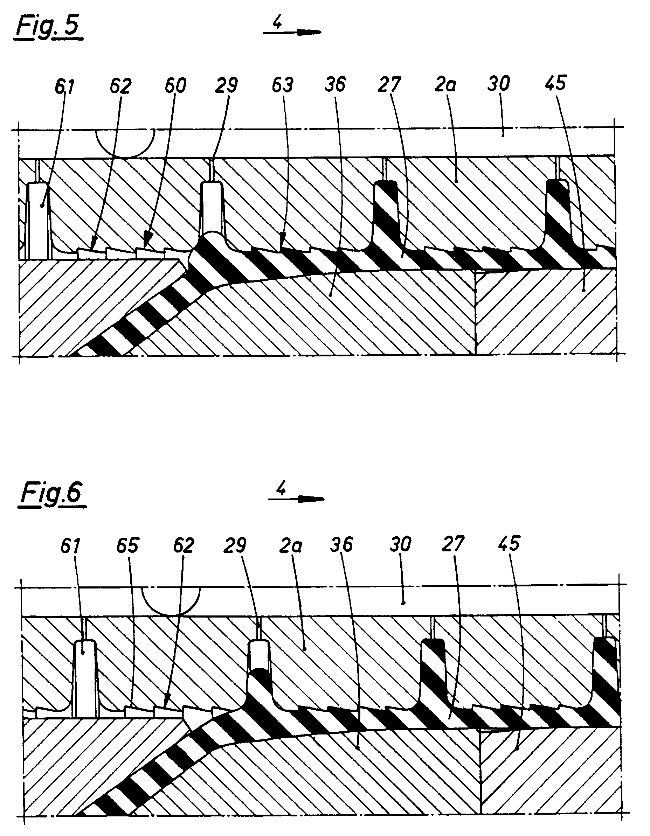

In der ersten Phase wird die hochkomprimierte Kunststoff-Schmelze 23a durch den Düsenspalt 37 in den Expansionsraum 38 am Beginn des Formraums 27 gedrückt. Hierbei wird - wie sich aus Fig. 3 ergibt - eine in Produktionsrichtung 4 bereits vor dem Expansionsraum 38 befindliche Rippen-Formausnehmung 61 gefüllt. Die in dieser befindliche Luft wird durch die Entlüftungsschlitze 29 abgezogen, die eine so geringe Breite haben, daß flüssige Schmelze nicht in sie hineingelangen kann. Mit weiterwandernder Halbkokille 2a füllt sich die Rippen-Formausnehmung 61 vollständig, wie Fig. 4 zu entnehmen ist. Wenn dieses Stadium erreicht ist, füllt sich der Expansionsraum 38, da bei gleichbleibender konstanter Produktionsgeschwindigkeit in Produktionsrichtung 4, d.h. bei konstanter Geschwindigkeit der Halbkokillen 2a die Kunststoff-Schmelze 23a nur noch zu Erzeugung des zylindrischen Rohrwandabschnittes des Rohres 23 benötigt wird. Wenn eine nächste Rippen-Formausnehmung 61 über den Expansionsraum 38 gelangt, dann wird die Schmelze 23a in diese Rippen-Formausnehmung 61 gedrückt, wie Fig. 5 zu entnehmen ist. Bei weiterwandernder Halbkokille 2a füllt sich diese Formausnehmung 61, wodurch der relativ zur Halbkokille 2a und zu dieser Formausnehmung 61 zurückbleibende Expansionsraum 38 wieder teilweise von der Kunststoff-Schmelze geleert wird. An den Rohraußenwand-Formabschnitten 60 wird die Schmelze überproportional abgekühlt, so daß sie in diesem Bereich bereits nicht mehr dünnflüssig, sondern sehr zähflüssig wird. Die Förderflächen 64 der Förderrillen 62 üben also eine beträchtliche Förderwirkung auf den Kunststoff aus. Das Verhältnis des Abstandes f benachbarter Rippen 24, d.h. benachbarter Rippen-Formausnehmungen 61 zur axialen Länge g des Expansionsraums 38 ist im Bereich von 1:1 bis 1:1,5. In diesem Bereich, und zwar insbesondere im unteren Teil dieses Bereiches wird sichergestellt, daß durch die intensivierte Förderung der Kunststoff-Schmelze 23a durch die Förderrillen 62 die einzelnen Rippen-Formausnehmungen 61 nacheinander gefüllt werden. Am Ende dieser ersten Phase liegt bereits ein Rohr 23 vor.

Die zweite Phase der Formung des Rohres 23 findet über dem Bügelkopf 45 statt, der eine spiegelblanke Oberfläche hat, um das noch warmplastische Rohr 23 zu kalibrieren, damit es später eine saubere glatte Innenwand 67 aufweist. In dieser Phase 2 über dem Bügelkopf 45 erfolgt eine Teilabkühlung des Rohres 23, wobei es in seinem Oberflächenbereich von beispielsweise 0,1 mm Tiefe bereits auf 50 bis 60°C abgekühlt wird.

Die dritte Phase der Herstellung des Rohres 23 findet über dem Kühldorn 55 statt, auf dem die genaue Kalibrierung des Rohres 23 stattfindet. Der Kegel-Abschnitt 49 des Bügelkopfes 45 und der Kegelansatz 56 des Kühldorns 55 haben jeweils die Aufgabe, einen nahtlosen Übergang des Rohres 23 an der entsprechenden Übergangsstelle sicherzustellen.

Wie sich aus dem Vorstehenden ergibt, wird zu einer Zeit immer nur eine Rippe 23 geformt, d.h. es werden nicht mehrere Rippen-Formausnehmung 61 zur selben Zeit gefüllt. Erste wenn die letzte Rippen-Formausnehmung 61 mit Schmelze gefüllt ist, kommt die nächste Formausnehmung 61 über den Expansionsraum 38.

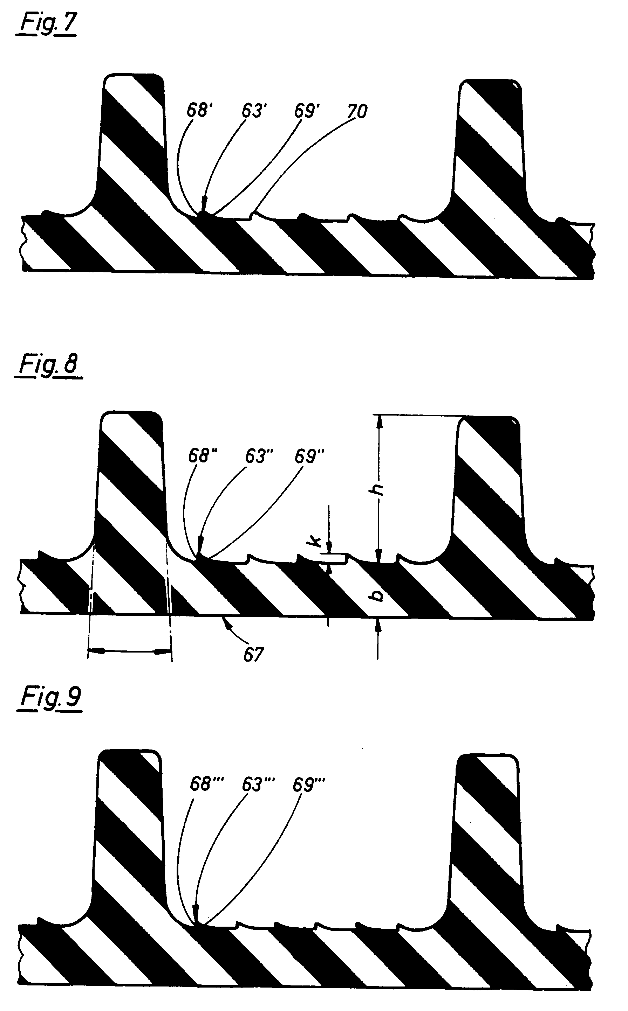

Fig. 7,8 und 9 zeigen unterschiedliche Ring-Erhebungen 63',63'',63''', denen angepaßte Formförderrillen in der Halbkokille 2a entsprechen. In Fig. 7 ist eine Ring-Erhebung 63' mit einer radial abfallenden Förderfläche 68' ausgebildet, der eine entsprechende Förderfläche als Begrenzung der zugeordneten Rippen-Formausnehmung entspricht. Diese Förderfläche 68' verläuft also etwa senkrecht zur in den Fig. 7,8 und 9 nicht dargestellten Mittel-Längs-Achse 41. Gleiches gilt für die Förderflächen 68'' und 68''' bei den Ausgestaltungen nach den Fig. 8 und 9. Bei Fig. 7 ist der Übergang zur flach abfallenden Flanke 69' mit einer deutlichen Abrundung 70 versehen. Durch diese Abrundung 70 entsteht in der entsprechenden Förderrille der Halbkokille 2a keine Kerbwirkung. Die Flanke 69' wird an der Begrenzungsfläche 65 der Halbkokille ausgeformt.

Bei den Ausgestaltungen nach Fig. 8 und 9 ist der Übergang von der Förderfläche 68'' bzw. 68''' zur Flanke 69'' bzw. 69''' spitz ausgebildet. Dies führt zu einer entsprechend guten Förderwirkung, allerdings zu einer nachteiligen Kerbwirkung in der Halbkokille 2a. Bei der Ausgestaltung nach Fig. 9 sind die Ring-Erhebungen 63''' mit geringerer radialer Höhe und in geringerem Abstand voneinander ausgebildet.

Die Rippen 24 weisen eine radiale Höhe h - gemessen vom Fuß der Förderflächen 68 bzw. Flanken 69 an - auf, die etwa 0,035 i ist, wobei i den Innendurchmesser des Rohres 23 bezeichnet. Die minimale Rohrwanddicke b entspricht etwa 0,015 i. Die Höhe der Ring-Erhebungen 63 beträgt etwa 0,12 b bis 0,16 b.

## Patentansprüche

1. Verfahren zum Herstellen eines Rippen-Rohres aus Kunststoff in einem sich in einer Produktionsrichtung (4) bewegenden Formraum (27), wobei Kunststoff-Schmelze (23a) in den Formraum (27) eintritt, wobei in Produktionsrichtung (4) hintereinander vorgesehene Rippen (24) nacheinander ausgeformt werden, wobei ein mit den Rippen (24) einstückiges Rohr (23) gebildet wird und wobei eine Rippe (24) erst ausgeformt wird, wenn die in Produktionsrichtung (4) voreilende Rippe (24) bereits vollständig ausgeformt ist, dadurch gekennzeichnet, daß in der Oberfläche der im Formraum (27) befindlichen Kunststoff-Schmelze (23a) Erhebungen (63) mit in Produktionsrichtung (4) nacheilenden im wesentlichen senkrecht zur Längsachse des zuerzeugenden Rohres verlaufenden Förderflächen (68) und in Produktionsrichtung (4) flach abfallenden Flanken (69) ausgebildet werden, wobei die Höhe der Erhebungen (63) etwa das 0,12- bis 0,16-fache der maximalen Rohrwanddicke (b) beträgt, und daß der Formraum (27) über Entlüftungsbohrungen oder -schlitze (29) entlüftet wird.

2. Verfahren nach Anspruch 1, dadurch gekennzeichnet, daß die Erhebungen als Ring-Erhebungen (63) ausgebildet werden.

3. Vorrichtung zur Durchführung eines Verfahrens zum Herstellen eines Rippen-Rohres aus Kunststoff in einem sich in einer Produktionsrichtung (4) bewegenden Formraum (27), wobei Kunststoff-Schmelze (23a) in den Formraum (27) eintritt, wobei in Produktionsrichtung (4) hintereinander vorgesehene Rippen (24) ausgeformt werden, wobei ein mit den Rippen (24) einstückiges Rohr (23) gebildet wird, wobei die Rippen (24) nacheinander ausgeformt werden und wobei eine Rippe (24) erst ausgeformt wird, wenn die in Produktionsrichtung (4) voreilende Rippe (24) bereits vollständig ausgeformt ist, welche Vorrichtung versehen ist mit paarweise umlaufenden, sich auf einer Formstrecke (9) zu einer in einer Produktionsrichtung (4) bewegenden Form ergänzenden Halbkokillen (2, 2', 2a), wobei die Halbkokillen (2, 2', 2a) eine einen Formraum (27) nach außen begrenzende, abwechselnd durch Rohraußenwand-Formabschnitte (60) und Rippen-Formausnehmungen (61) gebildete Formausnehmung (28) aufweisen, mit einer den Formraum (27) in Produktionsrichtung (4) vorgeordneten Düse (25) mit einem Düsenspalt (37), mit einem sich an den Düsenspalt (37) anschließenden, den Formraum (27) nach innen begrenzenden, sich in Produktionsrichtung (4) zur Formausnehmung (28) hin unter Bildung einer Formschräge (43) erweiternden Spritzdorn (36), mit einem sich an den Düsenspalt (37) unmittelbar anschließenden, zwischen der Formschräge (43) des Spritzdorns (36) und der Formausnehmung (28) ausgebildeten Eryansionsraum (38), mit einem dem Expansionsraum (38) vorgeordneten, zwischen der Formausnehmung (28) und der Düse (25) ausgebildeten Sicherheitsspalt (34) und mit einem dem Spritzdorn (36) in Produktionsrichtung (4) nachgeordneten Kühldorn (55), dadurch gekennzeichnet, daß die Rohraußenwand-Formabschnitte (60) mit Förderrillen (62) mit in Produktionsrichtung (4) hintenliegenden, im wesentlichen senkrecht zur Längsachse (41) der Düse (25) verlaufenden Förderflächen (64) und in Produktionsrichtung (4) flach abfallenden Flanken (65) versehen sind und daß der Formraum (27) über Lüftungsbohrungen oder - schlitze (29) entlüftet wird.

4. Vorrichtung nach Anspruch 3, dadurch gekennzeichnet, daß die radiale Erstreckung (a) des Expansionsraums (38) unmittelbar vor dem Düsenspalt (37) kleiner ist als die doppelte Wandstärke (e) des Rohres (23).

5. Vorrichtung nach Anspruch 3, dadurch gekennzeichnet, daß die Länge (g) des Expansionsraums (38) in Produktionsrichtung (4) etwa dem 1 - bis 1,5fachen Abstand (f) zweier benachbarter Rippen-Formausnehmungen (61) entspricht.

6. Vorrichtung nach Anspruch 3, dadurch gekennzeichnet, daß zwischen dem Spritzdorn (36) und dem Kühldorn (55) ein zum Kalibrieren der Innenwand des Rohres (23) dienender Bügelkopf (45) vorgesehen ist.

7. Vorrichtung nach Anspruch 3, dadurch gekennzeichnet, daß die Förderrillen (62) im radial außenliegenden Übergangsbereich von der Förderfläche (64) in eine in Produktionsrichtung (4) flach abfallende Flanke mit einer Abrundung (70) versehen sind.

8. Vorrichtung nach Anspruch 3, dadurch gekennzeichnet, daß die Förderrillen (62) im radial außenliegenden Übergangsbereich von der Förderfläche (64) in eine in Produktionsrichtung (4) flach abfallende Flanke scharfkantig ausgebildet sind.

## Claims

1. Method for producing a firmed tube from synthetic plastics material in a molding chamber (27) moving in a direction of production (4), wherein molten plastics material (23a) enters the molding chamber (27), wherein fins (24) provided one after another in the direction of production (4) are molded in succession, wherein a tube (23) is formed which is integral with the fins (24), and wherein a fin (24) is formed only after the fin (24) advancing in the direction of production (4) has already been completely formed, characterized in that raised portions (63) with conveying surfaces (68) trailing in the direction of production (4) and extending substantially at a right angle to the longitudinal axis of the tube to be produced and with flanks (69) sloping flatly downwardly in the direction of production (4) are formed in the surface of the molten plastics material (23a) which is present in the molding chamber (27), wherein the height of the raised portions (63) is approximately 0.12 to 0.16 times the maximum wall thickness (b) of the tube and in that the molding chamber (27) is vented via venting ports or slots (29).

2. Method according to claim 1, characterized in that the raised portions are constructed as annular raised portions (63).

3. Apparatus for carrying out a method for producing a firmed tube from synthetic plastics material in a molding chamber (27) moving in a direction of production (4), wherein molten plastics material (23a) enters the molding chamber (27), wherein fins (24) provided one after another in the direction of production (4) are molded, wherein a tube (23) is formed which is integral with the fins (24), wherein the fins (24) are molded in succession, and wherein a fin (24) is molded only after the fin (24) advancing in the direction of production (4) has already been completely molded, which apparatus is provided with half molds (2, 2', 2a) encircling in pairs which supplement each other on a molding line (9) to produce a mold moving in a direction of production (4), wherein the half molds (2, 2', 2a) comprise a molding recess (28) defining a molding chamber (27) towards the outside and formed alternately by portions (60) for molding the outside wall of the tube and molding recesses (61) for forming the fins, with a nozzle (25) preceding the molding chamber (27) in the direction of production (4) with a nozzle gap (37), with a molding core (36) adjacent the nozzle gap (37) and defining the molding chamber (27) towards the inside and widening out in the direction of production (4) towards the molding recess (28) while forming a draught (43), with an expansion space (38) immediately adjacent the nozzle gap (37) and constructed between the draught (43) of the core (36) and the molding recess (28), with a safety gap (34) preceding the expansion space (38) and constructed between the molding recess (28) and the nozzle (25), and with a cooling core (55) on the downstream side of the molding core (36) in the direction of production (4), characterized in that the portions (60) for molding the outside wall of the tube are provided with conveyor grooves (62) with conveying surfaces (64) located on the rearward side in the direction of production (4) and extending substantially at a right angle to the longitudinal axis (41) of the nozzle (25) and with flanks (65) sloping flatly downwardly in the direction of production (4), and in that the molding chamber (27) is vented via venting ports or slots (29).

4. Apparatus according to claim 3, characterized in that the radial extension (a) of the expansion space (38) is, immediately upstream of the nozzle gap (37) smaller than twice the wall thickness (e) of the tube (23).

5. Apparatus according to claim 3, characterized in that the length (g) of the expansion space (38) in the direction of production (4) corresponds substantially to 1 to 1.5 times the gap (f) between two adjacent fin molding recesses (61).

6. Apparatus according to claim 3, characterized in that between the molding core (36) and the cooling core (55) there is a calendar head (45) which serves for calibrating the inside wall of the tube (23).

7. Apparatus according to claim 3, characterized in that the conveyor grooves (62) have a rounded shape (70) in the radially outer transition zone from the conveying surface (64) into a flank which is sloping flatly downwardly in the direction of production (4).

8. Apparatus according to claim 3, characterized in that the conveyor grooves (62) are of sharp edged construction in the radially outer transition zone from the conveying surface (64) into a flank which is sloping flatly downwardly in the direction of production (4).

## Revendications

1. Procédé de fabrication d'un tuyau nervuré en matière plastique dans une chambre de moulage (27) se déplaçant dans la direction de production (4), de la matière plastique en fusion (23a) pénétrant dans la chambre de moulage (27), des nervures (24) disposées les unes derrière les autres dans la direction de production (4) étant moulées l'une après l'autre, un tuyau (23) étant formé d'un seul bloc avec les nervures (24), et une nervure (24) n'étant moulé que lorsque la nervure (24) précédente dans la direction de production (4) est déjà entièrement moulée, caractérisé en ce que des surépaisseurs (63) munies de surfaces d'avance (68) sensiblement perpendiculaires à l'axe longitudinal du tuyau à produire et situées en aval par rapport à la direction de production (4) et de flancs (69) en pente douce dans la direction de production (4) sont moulées dans la surface de la matière plastique en fusion (23a) se trouvant dans la chambre de moulage (27), la hauteur des surépaisseurs (63) étant égale de 0,12 à 0,16 fois l'épaisseur maximum (b) de la paroi du tuyau, et en ce que la chambre de moulage (27) fait l'objet d'une purge d'air par l'intermédiaire de perçages ou de fentes de purge d'air (29).

2. Procédé selon la revendication 1, caractérisé en ce que les surépaisseurs sont conçues sous la forme de surépaisseurs annulaires (63).

3. Dispositif pour réaliser un procédé de fabrication d'un tuyau nervuré en matière plastique dans une chambre de moulage (27) se déplaçant dans la direction de production (4), de la matière plastique en fusion (23a) pénétrant dans la chambre de moulage (27), des nervures (24) étant réalisées les unes derrière les autres dans la direction de production (4), un tuyau (23) étant formé d'un seul bloc avec les nervures (24) , les nervures (24) étant moulées les unes après les autres, et une nervure (24) n'étant moulée que lorsque la nervure (24) précédente dans la direction de production (4) est déjà entièrement moulée, ledit dispositif comprenant des demi-coquilles (2, 2', 2a) qui circulent par paires et se complètent sur une ligne de moulage (9) pour former un moule se déplaçant dans la direction de production (4), les demi-coquilles (2, 2', 2a) comportant une cavité de moulage (28) qui délimite une chambre de moulage (27) vers l'extérieur et qui est formée par l'alternance de portions (60) de moulage de la paroi extérieure du tuyau et de cavités (61) de moulage des nervures, une buse (25) munie d'un interstice de buse (37) et précédant la chambre de moulage (27) dans la direction de production (4), une broche d'injection (36) qui est adjacente à l'interstice de buse (37), qui délimite la chambre de moulage (27) vers l'intérieur et qui s'élargit dans la direction de production (4) vers la cavité de moulage (28) en formant une dépouille (43), une chambre d'expansion (38) directement adjacente à l'interstice de buse (37) et ménagée entre la dépouille (43) de la broche d' injection (36) et la cavité de moulage (28) un interstice de sécurité (34) qui précède la chambre d'expansion (38) et est ménagé entre la cavité de moulage (28) et la buse (25), et une broche de refroidissement (55) disposée après la broche d'injection (36) dans la direction de production (4), caractérisé en ce que les portions (60) de moulage de la paroi extérieure du tuyau sont munies de rainures d'avance (62) possédant des surfaces d'avance (64) sensiblement perpendiculaires à l'axe longitudinal du tuyau à produire et disposées à l'arrière par rapport à la direction de production (4) et des flancs (65) en pente douce dans la direction de production (4), et en ce que la chambre de moulage (27) fait l'objet d'une purge d'air par l'intermédiaire de perçages ou de fentes de purge d'air (29).

4. Dispositif selon la revendication 3, caractérisé en ce que l'extension radiale (a) de la chambre d'expansion (38) ménagée juste devant l'interstice de buse (37) est inférieure à deux fois l'épaisseur de paroi (e) du tuyau (23).

5. Dispositif selon la revendication 3, caractérisé en ce que la longueur (g) de la chambre d'expansion (38) dans la direction de production (4) est comprise sensiblement entre 1 et 1,5 fois la distance (f) entre deux cavités voisines (61) de moulage des nervures.

6. Dispositif selon la revendication 3, caractérisé en ce que, entre la broche d'injection (36) et la broche de refroidissement (55), est prévue une tête formant étrier (45) qui sert à calibrer la paroi intérieure du tuyau (23).

7. Dispositif selon la revendication 3, caractérisé en ce que, dans la zone de transition extérieure radiale entre la surface d'avance (64) et un flanc descendant en pente douce dans la direction de production (4), les rainures d'avance (62) sont munies d'un arrondi (70).

8. Dispositif selon la revendication 3, caractérisé en ce que, dans la zone de transition extérieure radiale entre la surface d'avance (64) et un flanc descendant en pente douce dans la direction de production (4), les rainures d'avance (62) possèdent des arêtes vives.
